# EUROPEAN PATENT SPECIFICATION

(11) **EP 1 768 315 B1**
(45) Date of publication and mention of the grant of the patent: **05.06.2013**
(21) Application number: 05714844.7
(22) Date of filing: 15.03.2005
(51) Int. Cl.: H04L 12/28

(54) **A METHOD FOR STORING THE DATA PACKET BY USING THE POINTER TECHNIQUE**
VERFAHREN ZUM SPEICHERN DES DATENPAKETS DURCH VERWENDEN DER ZEIGERTECHNIK
PROCEDE DE STOCKAGE DE PAQUET DE DONNEES A L'AIDE D'UNE TECHNIQUE DE POINTAGE

(30) Priority: 25.06.2004 CN 200410049841
(43) Date of publication of application: 28.03.2007
(73) Proprietor: ZTE Corporation, Shenzhen 518057 (CN)
(72) Inventor: LIU, Feng, ZTE Plaza, Keji Road South,, 518057 Shenzhen, Guangdong (CN)
(74) Representative: Leszczynski, André
(86) International application number: PCT/CN2005/000314
(87) International publication number: WO 2006/000139

(56) References cited:
- EP-A2- 1 073 251
- CN-A- 1 470 996
- US-A1- 2002 026 566
- US-B1- 6 539 024
- US-B1- 6 606 317
- US-B1- 6 611 930

## Description

### TECHNICAL FIELD

The present invention relates to network technique area, more particularly, to a method for storing data packets.

### BACKGROUND OF THE INVENTION

From 90's of last century, the network technique has been developing rapidly. The standard system on network has been improved gradually. The application of new technique drives the price of the products substantially down. The network technique is brought into people's daily lift with the construction of national backbone data network and becomes a new consumption point besides the communication expense.

Point-to-point communication technique is used in conventional telephone network, in which one communication channel is entirely occupied by a user in a monopolistic way without considering whether or not the user is conversing on the telephone. Therefore, the communication is of low efficiency and the communication system is of high complexity, poor flexibility and high cost. Data packet mode is used to communicate in network technique, in which all users share the entire communication network, and other users can use the communication channel if one user does not use it. Therefore, high efficiency, simple communication system and low cost can be achieved by using network technique. As a result, the network technique products develop rapidly.

The core of the network product is data packet exchange. The process of data packet exchange includes: storing the data packets first; then processing the data packets via overhead bytes; searching routes and taking out the data packets after the routing direction is determined; and then sending out the data packets. A big buffer unit is needed in the product to store the received data packets. The method of processing data packets by using network technique has the following characteristics. Firstly, operations for storing and reading are processed speedily as a mass of data packets required to be exchanged within a short time. Secondly, different types of data packets are involved in exchanging, thereby they should be firstly classified before being stored in series In addition, the length of each data packet is random thus to be of indetermination, such as, a minimum length may be 64 bytes, but 9600 bytes for a maximum length.

US6539024B1 discloses a method and apparatus for buffering data cells in a queuing element. Each queuing element includes a partitioned buffer, where the partitioned buffer includes a plurality of partitions. Each of the partitions stores data cells received by the queuing element. Storage of the data cells into the partitions is accomplished by using an array of logical queues. Each logical queue of the array of logical queues maps data cells corresponding to that logical queue to a particular partition of the plurality of partitions. More than one logical queue may map data cells to a particular partition. Each partition may include a reserved portion, where each logical queue that maps to the partition may map a portion of its data cells to the reserved portion. The resources of the reserved portion to which a logical queue maps data cells are reserved to that specific logical queue and cannot be utilized by other logical queues. Each partition also includes a shared portion, where all of the logical queues that map to a partition are able to utilize the storage space included in the shared portion. Each logical queue includes a maximum size. Depth pointers corresponding to the logical queue and the partition are updated as data cells are enqueued to, and dequeued from, the logical queue.

Generally, the following conventional methods are used to store the data packets.

One of the methods of the prior art is that the data of a data packet are continuously stored in continuous address units.

Another method of the prior art is that data packets are stored by using simple pointer technique, wherein data packets are stored according to the value of the pointer.

Still another method of the prior art is that a combination of pointer technique and continuous storage is used for storing the packets.

However, several disadvantages for the afore-mentioned methods are difficult to settle. The data packets are greatly variable in length. It is usually necessary to assign the storage space according to the maximum one when a data packet is continuously stored for the reason that the length of the data packet is unknown. Therefore, a great waste of the storage space could be caused by the method of the prior art if the assigned adequate space is used to store small ones. There exists another situation in the method of the prior art to result in a great waste of storage space. Data packets may be forwarded to different directions after entry into a port, whereas data packets received by a port also may come from different directions. The data packets should be classified in advance according to the different directions of the data packets and be further classified according to the types of the data packets before being stored. To avoid confusion due to various types of data packets, the whole storage space should be partitioned into a plurality of sub areas in order to store the various types of data packets in different directions. The more ports are provided the more sub area are partitioned. However, the space for each partitioned sub area is assigned according to the largest number of data packets in the buffer. Thus, a vast space in sub areas may not be efficiently used if the number of data packets in the sub areas is far smaller. Furthermore, the conventional method is low reliability. An individual data bit in disorder often appears once any unexpected disturbance such as lightning strike, radiation and temperature variation and so on occurs while running the circuit. Hence, the system may collapse due to the failure of storage operation if an error caused by the data bit in disorder happens to the pointer value, as the system is unable to find other data.

### SUMMARY OF THE INVENTION

An object of the present invention is to provide a method for storing the data packets by using pointer technique so as to overcome the disadvantages of low efficiency while storing data packet storage, low availability of storage space, bad effect on the system due to data packet content error, low reliability of the whole storage unit (block) operation and storage efficiency easily to be affected by the number and types of data packets.

The method for storing data packets by using the pointer technique comprises: partitioning a storage space into a work area and a standby area, each of which is used to store the data packets by using pointer technique; performing operations including storing operation and reading operation, with respect to the data packets in the work area, and performing only reading operations for the data packets in the standby area; and, switching between the work area and the standby area if the space in the work area is not enough or if no free space is available in the work area.

Preferably, said step of partitioning the storage space into a work area and a standby area, each of which is used to store the data packet by using the pointertechnique, further comprises: partitioning the work area and the standby area into a plurality of small storage units respectively; and connecting the small storage units in the work area and the standby area by using pointers respectively.

Preferably, said step of performing operation with respect to the data packet in the work area further comprises: judging whether the current data packet operation is a storing operation or a reading operation for a data packet. If said operation is a storing operation for a data packet, then perform following steps: judging whether there exists any free space in the work area; if yes, storing the data packet into one or more storage units in the said free space by using the pointer technique, and setting a pointer pointing to the packet header of said data packet; if no, switching between said the work area and said standby area, which changes the former work area into a new standby area and changes the former standby area into a new work area, and storing the data packet after said switching is completed (the new work area is entirely empty, in which data packets can be stored). If said operation is a reading operation for a data packet, perform following steps: continuously reading said data packet from one or more storage units according to the pointer pointing to the packet header of said data packet, checking whether the value of the pointer in said storage unit which points to a next storage unit is correct or not; if yes, outputting the content in said storage unit, reclaiming the storage space, and continue to read next storage unit until all the contents of said data packet are output; otherwise, terminating the reading operation, discarding said data packet as well as the space occupied by said storage units.

Preferably, said step of storing the data packet into one or more storage units in the free space by using the pointer technique further comprises: generating a check bit according to the value of the pointer in said one or more storage units that points to a next storage unit; and storing said check bit together with the corresponding value of the pointer and the data packet.

Preferably, said step of checking whether the value of the pointer which points to the next storage unit during the reading operation for a data packet is correct or not further comprises: generating a check bit according to the value of the pointer in said storage unit; collecting the check bit stored together with said data packet in said storage unit; comparing said generated check bit with said collected check bit; judging the value of the pointer is correct if said two check bits are identical, otherwise, judging the value of the pointer is not correct..

Preferably, said each small storage unit in said work area and said standby area comprises a space used to store said value of the pointer, check bit and data packet respectively. Parity check method, cyclic redundancy check (CRC) method, or the like is used to generate the check bit with regard to the value of the pointer in said step of generating a check bit.

Preferably, said step of switching between the work area and standby area further comprises: (1) cleaning out all the data packets stored in said standby area, and changing all the storage units in the standby area into free storage units; (2) initializing said standby area, connecting all the free storage units in the standby area by using pointers, and using free queue pointer to point to the head of said connected free storage units ; (3) switching the work area into a new standby area and switching the standby area into a new work area, wherein the new standby area is read-only; (4) storing new data packets into said new work area. The order of step (1) to step (3) can be changed to: first switching between the work area and the standby area, then cleaning out and initializing the new work area, while the operation results are completely the same.

Preferably, the space in the work area is judged to be not enough if the quantity of the free storage area (free storage block) in the work area is less than a predetermined threshold.

The method for storing data packet by using the pointer technique in accordance with the present invention can be used to store data packet efficiently regardless of size of data packets, thereby the availability of the storage unit is improved and the possibility of the storage process affected by the size of data packets is reduced. The method of the present invention may prevent the storage system from collapse caused by an error through judging whether the pointer value is correct or not. Therefore, the storage operation could not be affected, as those pointer contents to be in error will be discarded directly. Furthermore, the method of the present invention can also improve the reliability of storage operation by initializing the former storage unit to avoid the accumulation effect of the pointer as to be stored.

### BRIEF DESCRIPTION OF THE DRAWINGS

FIG.1 is a flow chart of the method for storing the data packet by using pointer technique provided in the present invention;

FIG.2 is a structural schematic diagram of the storage unit in the storage space;

FIG.3 is a schematic diagram showing the storage result of the data packets stored in the storage space according to the prior art;

FIG.4 is a schematic diagram showing the structure of the pointer value, check bit value and data packet in the storage unit;

FIG.5 is a schematic diagram showing the structure of the data packets stored in the storage unit in a protected mode;

FIG.6 is a schematic diagram showing the switching process of the storage areas of the data packets;

FIG.7 is a schematic diagram showing the storage structure of the data packet after switching between the work area and the standby area.

### DESCRIPTION OF PREFERRED EMBODIMENTS

The method for storing data packets by using the pointer technique provided in the present invention will be described in detail hereinafter with reference to the accompanying drawings.

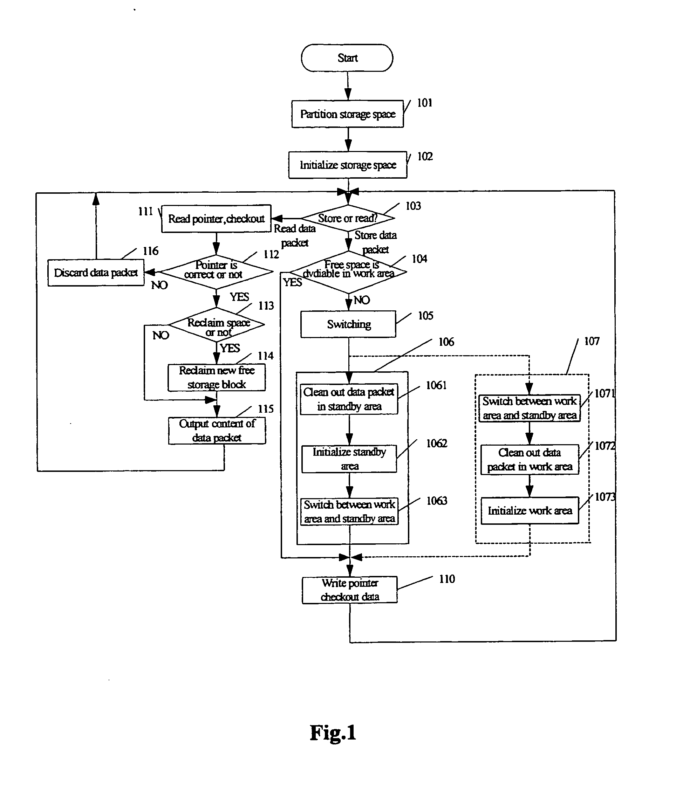

FIG.1 is a flow chart of the method of the present invention, which uses pointer technique to store data packets. First, in step 101, the storage space is partitioned into two areas: work area and standby area. Then in step 102, these two areas are initialized and both are partitioned into a plurality of small storage units. These pluralities of small storage units are connected via pointers; thereby a free storage space is formed. Then, start the operation for the data packets: first, in step 103, judging whether the current operation is storing a data packet or reading a data packet.

If the current operation is storing a data packet, then in step 104, judging whether or not there exists any free space in the work area; if yes, the data packet is directly stored into the free space; otherwise, switch between the work area and the standby area. Two switching processes, switching process 106 and 107, with different operation order, are illustrated in FIG.1. Switching process 106 includes: in step 1061, clean out data packets in the standby area; in step 1062, initialize the standby area; in step 1063, switch between the work area and the standby area. Switching process 107 includes: in step 1071, switch between the work area and the standby area; in step 1072, clean out data packets in the work area; in step 1073, initialize the work area. The operation steps in switching process 106 and 107 are the same, but the order of the steps is different, which means said steps can be arranged in the order of switching process 106, the order of switching process 107 or other orders. In practical applications, only one of switch processes 106 and 107 can be selected. The operation object is the standby area if the operations of cleaning out data packets and initializing the standby area are first performed (then switching between the work area and the standby area); if the switch between the work area and the standby area is first performed, then the operation object of the operation of cleaning out data packet and initializing is the new work area, namely, the former standby area; therefore, the operation results are completely the same.

Then in step 110, start to store data packets, after which the write operation for the data packets is over.

If data packets are required to be read out in current operation, then in step 111, directly read the corresponding data packets. Then, in step 112, judge whether the data packet check is correct or not. If the check is correct, then in step 113, judge whether reclaiming the new free storage block generated after the reading is required or not; if yes, reclaim said new free storage block in step 114; otherwise, discard it directly. Then, in step 115, output the data packets that are read out and end the read operation for the data packet. Moreover, if checking error occurs to the data packet that are read out, turns to step 116, discard said data packet directly without reclaiming the generated new free storage block, and end the read data packet operation.

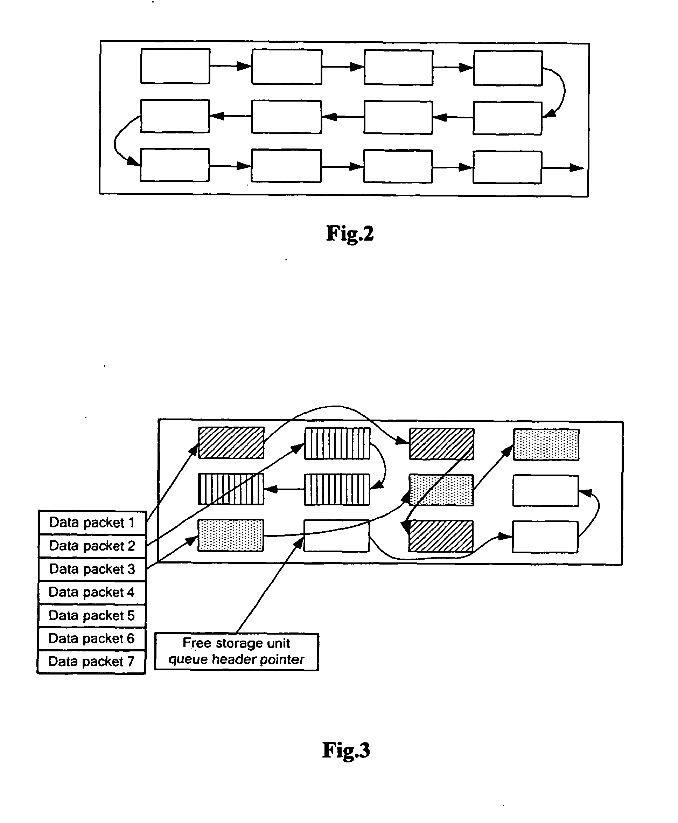

FIG.2 is a structural schematic diagram of storage units in the storage space.

When pointer technique is used to store data packets, the storage space is partitioned into a plurality of storage units in which the data packets are stored. A plurality of storage units may be needed to store one data packet. The physical address of these storage units may not be continuous and pointers are used to connect these storage units.

FIG.3 is a schematic diagram that shows the storage result of data packets stored in the storage space according to the prior art.

The reason, for which the storage result is generated, is determined by the characteristics of the data packet. The core of the network product is data packet exchange, wherein judgment of different data packets is needed, judging which direction the data packet should go and sending it toward corresponding direction. Because the quantity of the data packets in the data packet exchange process is large and the processing process is complex, some time is needed to process these data packets. Therefore, before judging the direction of the data packets and sending them out, the data packets need to be put into a buffer first and then be sent out after the sending direction (route) is determined. Since the data packets are transmitted in a high speed and the length thereof is indefinite, it may take multiple time segments to completely receive one data packet. Also, lots of different receiving directions and sending directions may exist at the same time, therefore it may happen that data packets received from different directions are sent to the same direction or different types of data packets are time-sharing received from the same direction. Consequently, the storage mode of the data packets is very important.

To adapt the variation of the data packets, the whole buffer may be partitioned into many small storage units. Each data packet is stored in these storage units, wherein big data packet occupies more storage units while small data packet occupies fewer storage units so as to adapt the size variation of the data packets. To achieve the object that many data packets can be received simultaneously, it may start receiving other data packets before completely receiving one data packet while the continuous storage mode is not used in storing, i.e. the physical space of the storage units occupied by one data packet may be not continuous, thereby, other data packet may be stored before one data packet is completely received. In order to know the storage position of all data in data packets, the physically discontinuous data packets should be connected, which means the pointer technique should be used. The pointer technique is used, in which one pointer is set in each storage unit to indicate the position of the next storage unit, thereby the storage of one integral data packet is achieved. Moreover, the header position of all data packets should also be stored to form a queue pointer group, in which each pointer points to the storage position of the corresponding data packet header. The pointer queue manages all the data packets stored, and when storing a data packet, the pointer points to the position of the new data packet header will be inserted into the queue tail. Following steps are included when reading a data packet: reading the position of the pointer of the data packet header from the pointer queue head; reading data of the data packet from the position; querying the pointer byte of the storage unit to determine the position of the next storage unit when reading one storage unit is finished; and reading the next storage unit until all data of the data packet is read. Furthermore, when reading of a data packet is finished, the pointer pointing to the data packet in the queue is cleaned out and the next data packet in the queue becomes the first data packet, and at the same time the storage space of the former data packet is reclaimed and becomes a new free storage unit which is used to store new data packets. When storing a data packet, data of the data packet is stored into a free storage unit, and the address of the storage unit is written into the pointer byte position of former storage unit, and the new storage unit is connected to the former storage unit, thereby achieving the connection of all storage units of a data packet. Furthermore, all free storage units in the buffer are also connected by using pointer, wherein the free queue head pointer points to the first free storage unit.

The method for storing data packets by using pointer technique in the prior art may adapt to the variety of the data packet size, utilize the buffer space sufficiently, and achieve discontinuous storage of a data packet, thereby meet the requirement of receiving a plurality of data packets simultaneously. However, disadvantages also exist in the pointer mode for the reason that pointer is used to search among storage units, thereby resulting in unique co-relationship and low anti-jamming capability. If disturbances such as electronic jamming, voltage anomalies, and temperature variation and so on happens to occur when the circuit is running, the next storage unit address to be read will be wrong once anything wrong happens to the value of the pointer that is operating. And a data packet read from a wrong position will cause the entire data packet to be completely wrong, which also destroys other correct data packets. If the pointer value of the free storage unit header is wrong, then it is impossible to find correct free storage unit, which will cause no free storage unit available in the whole buffer, thereby this buffer operation collapses and the system does not work. If anything wrong happens to the pointer value of some storage units in the circuit due to external interference, these storage units should be discarded so as to avoid more serious error and the discarded free storage units can not be used anymore. If the system works this way for a long time, the discarded free storage units will be accumulated like this, thereby the buffer size will get small gradually until finally there is no free storage unit available.

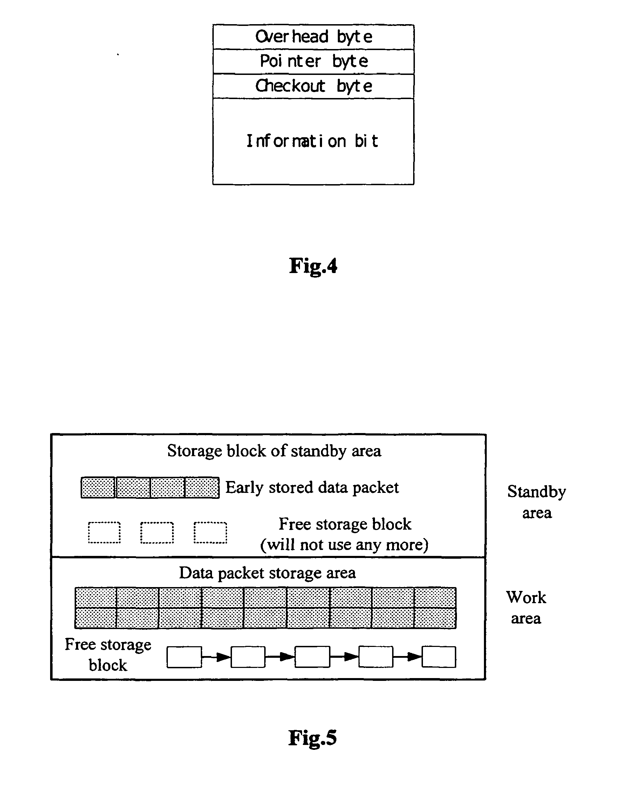

FIG.4 is a schematic diagram showing the structure of the pointer value, check bit value and data packet in the storage unit.

Check byte which is set in the storage unit, is used to check whether the value of the pointer of the storage unit is correct or not. According to the reliability of circuit system, simple parity check, CRC (Cyclic Redundancy Check) or other checking methods may be adopted. When the pointer value is written into the storage unit, check bit will be generated according to the value of the pointer .The check bit, which is written into the storage unit together with the pointer value, is used to check whether the pointer content is correct or not.

When reading the data packet, the value of the pointer and the check bit are read out together. Check bit is calculated according to the pointer value, which is then compared with the check bit that is read out. If the two check bits are identical, which indicates that the value of the pointer is correct, then the value of the pointer can be used to find the position of the next storage unit; if the two check bits are different , which indicates that there is error in the storage unit (pointer value, check bit), i.e. the value of the pointer that is read out is not reliable, then the value of the point can't be used to find the next storage so as to avoid more serious errors . If any wrong storage unit occurs, the read operation for the current data packet will be terminated and the data packet together with its storage space will be discarded. The discarded storage space will not be reclaimed and reused any longer. Whether the storage space of a data packet is correct or not may be diagnosed by using a method of checking. The data packet and its corresponding storage space will be discarded if something is wrong with the storage space, thus only one data packet is discarded and a wrong pointer value is avoided to be used in the circuit, which thereby avoids the buffer operation disorder caused by using the wrong value of the pointer. The check mode is used to check whether the pointer value is correct or not and thus to avoid applying the wrong pointer value, in which only the pointer content needs to be checked while the storage space (including data content) does not need to be checked. If there's anything wrong happens to the content of the data packet, only data packet error will occur and the normal operation of the buffer won't be affected. FIG.5 is a schematic diagram showing the structure of the data packets stored in the storage unit in a protected mode.

The buffer space is partitioned into two areas: the work area and the standby area.

When pointer mode is used to store the data packet, the data packet and its storage space are directly discarded if any error occurs to the storage unit, which thereby results in a decrease of the quantity of the buffer storage units. The decreasing process of the storage space has a cumulative effect, i.e. the buffer space will be continuously decreased so long as a wrong data unit exists. Therefore, even if the circuit has a high reliability, accumulating fragmentary errors will cause serious aftereffect, which will cause the storage space to be badly insufficient and system collapse. When the pointer mode is used to store the data packets, it will also be used to connect the un-used storage units (free storage unit), which are used to store data to be written into. If any error happens to the pointer of the first free unit of the free storage units, it is impossible to determine the position of latter free storage units, which directly causes no storage space (free storage unit) available, thereby result in system collapse. The method for storing data packet by using the pointer technique provided in the present invention can solve the problem effectively.

In the present invention, for the free storage units in the work area, pointer check bit is also used to judge whether the pointer is correct or not. When the system is running normally, all the data packets are working in the work area, and the buffer of the work area is completely the same as the buffer before the partition, only the storage space is half cut. All operations with respect to data packets are performed in the work area, which includes storing data packet into the work area and reading data packet from the work area. Moreover, free storage units are also in the work area and are also connected by using the pointer mode, and also the manner of pointer check is used to judge whether the pointer of the next free storage unit is correct or not. Storage area switching between the work area and the standby area is initiated when the buffer space in the work area is not enough due to too many bad storage units appear in the work area, or when no free storage unit can be found because of the pointer error of the first free storage unit.

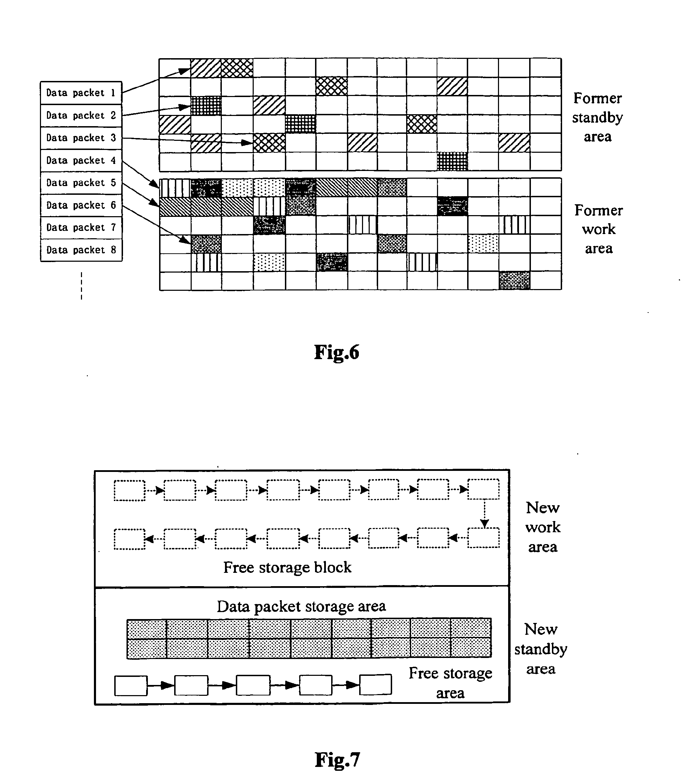

FIG.6 is a schematic diagram showing the switching process of the storage areas of the data packet.

Three operations need to be performed during the switching of the storage areas: (1) cleaning out the data packets in the former standby area; (2) initializing the standby area; (3) interchanging the work area and the standby area. Different order of these three operation steps may be used, but the data packets in the former standby area (namely, new work area after switching) will be cleaned out and the storage block in the former standby area will be initialized no matter which order is used. Discard directly the data packets that points to the former standby area when cleaning out the former standby area. In the example shown in FIG. 6, Data packet 1, Data packet 2 and Data packet 3 in the data queue are stored in the former standby area, so these three data packets have to be discarded and data is read out directly from the fourth data packet. After the discard operation is finished, there is no data packet in the former standby area. Then the former standby area is initialized and all the storage units are connected by using pointer, thus all the storage units become free storage units, i.e. the entire former standby area is empty and can be used to store data packets. After the initialization operation is completed, switching is performed so that the former work area becomes to be a new standby area and the former standby area becomes to be a new work area. The new work area is the former standby area, in which all storage units are free storage units and can be used to store data packets; and the new standby area is the former work area, which is read-only, i.e. data packets can only be read out from the new standby area and can't be stored into the new standby area, and also the free storage unit generated in the new standby area after reading will not be reclaimed. Thus, the data packets stored in the new standby area will be gradually read out until next switching. The data packets will be discarded directly if they are not read out when it's time for next switching.

After switching, the former work area becomes the new standby area and the former standby area becomes the new work area, and all storage units in the new work area are free storage units and can be used to store plenty of data packets, thereby system failure due to lack of free storage unit can be avoided.

FIG.7 is a schematic diagram showing the storage structure of data packets after switching the work area and the standby area. After switching the work area and the standby area, the storage status of data packets is the same as that before switching as shown in FIG.5; the only difference is that the position of the work area and the standby area are exchanged. The operation mode for storing and reading data packets keeps unchanged, i.e. data packets can be stored into and read from the new work area. The new standby area is read-only, i.e. data packets can only be read out from the new standby area but can not be stored into, and all the free storage units in the new standby area will not be utilized anymore.

## Claims

1. A method for storing data packets by using pointer technique, **characterized in that** the method comprises
partitioning a storage space into a work area and a standby area (101), each of which is used to store the data packets by using pointer technique;
performing operations, including storing operation and reading operation, with respect to the data packets in the work area (103), and performing only reading operations for the data packets in the standby area; and
switching between the work area and the standby area if the space in the work area is not enough or if no free space is available in the work area (105).

2. The method according to claim 1, **characterized in that** said step of partitioning the storage space into a work area and a standby area further comprises
partitioning said work area and said standby area into a plurality of small storage units respectively; and
connecting the small storage units in said work area and said standby area by using pointer respectively (102).

3. The method according to claim 1, **characterized in that** said step of performing operations with respect to the data packets in said work area further comprises
judging whether a current operation with respect to the data packets is a storing operation or a reading operation for a data packet (103);
if the current operation is a storing operation for a data packet, then performing following steps
judging whether there exists any free space in the work area (104),
if yes, storing the data packet into one or more storage units in said free space by using the pointer technique and setting a pointer pointing to the packet header of said data packet (110);
if no, switching between said work area and said standby area (105);
if the current operation is a reading operation for a data packet, then performing following steps
reading said data packet continuously from one or more storage units according to the pointer that points to the packet header of said data packet (111), and checking whether the value of the pointer in said one or more storage units pointing to a next storage unit is correct or not (112); if yes, outputting said data packet (115) and reclaiming the storage space occupied by said data packet (114); otherwise, discarding said data packet (116).

4. The method according to claim 3, **characterized in that** said step of storing the data packet into one or more storage units in the free space by using the pointer technique further comprises
generating a check bit according to the value of the pointer in said one or more storage units pointing to a next storage unit; and
storing said check bit together with corresponding value of the pointer and the data packet (110).

5. The method according to claim 4, **characterized in that** said step of checking whether the value of the pointer that points to the next storage unit during the reading operation for a data packet is correct or not further comprises
generating a check bit according to the value of the pointer in said storage unit;
collecting the check bit stored together with the data packet in said storage unit;
comparing said generated check bit with said collected check bit; and judging the value of the pointer is correct if said two check bits are identical; otherwise, judging the value of the pointer is not correct.

6. The method according to claim 5, **characterized in that** said each small storage unit in said work area and said standby area comprises a space used for storing said value of pointer, check bit and data packet respectively.

7. The method according to claim 4 or 5, **characterized in that** a parity check method is used to generate the check bit with regard to the value of the pointer in said step of generating a check bit.

8. The method according to claim 4 or 5, **characterized in that** a cyclic redundancy check method is used to generate the check bit with regard to the pointer value in said step of generating a check bit.

9. The method according to claim 1, **characterized in that** said step of switching between the work area and the standby area further comprises
cleaning out all data packets stored in said standby area (1061);
initializing said standby area, and connecting all the free storage units in the standby area by using pointers (1062);
switching the work area into a new standby area, and switching the standby area into a new work area (1063), wherein the new standby area is read-only; and
storing the new data packet into the new work area (110).

10. The method according to claim 1 or 9, **characterized in that** comprise the step of determining the a free space in the work area is determined to be not enough if a quantity of the free storage space in the work area is less than a predetermined threshold.

## Patentansprüche

1. Verfahren zum Speichern von Datenpaketen mit Hilfe der Zeigertechnik, **dadurch gekennzeichnet, dass** das Verfahren umfasst:
Aufteilen eines Speicherraumes in einen Arbeitsbereich und einen Bereitschaftsbereich (101), von denen jeder zum Speichern der Datenpakete mit Hilfe der Zeigertechnik benutzt wird,
Ausführen von Operationen, einschließlich Speicher- und Leseoperationen, in Bezug auf die Datenpakete in dem Arbeitsbereich (103), und Ausführen nur von Leseoperationen für die Datenpakete in dem Bereitschaftsbereich, und
Umschalten zwischen dem Arbeitsbereich und dem Bereitschaftsbereich, wenn der Platz in dem Arbeitsbereich nicht ausreicht oder wenn kein freier Platz in dem Arbeitsbereich (105) verfügbar ist.

2. Verfahren nach Anspruch 1, **dadurch gekennzeichnet, dass** der Schritt der Aufteilung des Speicherraumes in einen Arbeitsbereich und einen Bereitschaftsbereich weiterhin umfasst:
Aufteilen des Arbeitsbereiches und des Bereitschaftsbereiches in jeweils mehrere kleine Speichereinheiten, und
Verbinden der kleinen Speichereinheiten in dem Arbeitsbereich und in dem Bereitschaftsbereich durch Verwendung jeweiliger Zeiger (102).

3. Verfahren nach Anspruch 1, **dadurch gekennzeichnet, dass** der Schritt der Ausführung von Operationen in Bezug auf die Datenpakete in dem Arbeitsbereich weiterhin umfasst:
Entscheiden, ob eine aktuelle Operation in Bezug auf die Datenpakete eine Speicheroperation oder eine Leseoperation für ein Datenpaket ist (103),
wenn die aktuelle Operation eine Speicheroperation für ein Datenpaket ist, Ausführen der folgenden Schritte:
Entscheiden, ob es irgendeinen freien Platz in dem Arbeitsbereich gibt (104),
wenn ja, Speichern des Datenpaketes in einer oder mehreren Speichereinheiten in diesem freien Platz mit Hilfe der Zeigertechnik und Setzen eines Zeigers, der auf den Kopf dieses Datenpakets (110) zeigt,
wenn nein, Umschalten zwischen dem Arbeitsbereich und dem Bereitschaftsbereich (105),
wenn die aktuelle Operation eine Leseoperation für ein Datenpaket ist, Ausführen der folgenden Schritte:
kontinuierliches Auslesen des Datenpakets aus den ein oder mehreren Speichereinheiten entsprechend dem Zeiger, der auf den Kopf dieses Datenpakets (111) zeigt, und Prüfen, ob der Wert des Zeigers in diesen ein oder mehreren Speichereinheiten, der auf eine nächste Speichereinheit zeigt, korrekt ist oder nicht (112), wenn ja, Ausgeben dieses Datenpaketes (115) und Freigeben des Speicherplatzes, der von diesem Datenpaket eingenommen wurde (114), andernfalls, Verwerfen dieses Datenpakets (116).

4. Verfahren nach Anspruch 3, **dadurch gekennzeichnet, dass** der Schritt der Speicherung des Datenpakets in einer oder mehreren Speichereihheiten in dem freien Platz mit Hilfe der Zeigertechnik weiterhin umfasst:
Erzeugen eines Prüfbits entsprechend dem Wert des Zeigers in diesen ein oder mehreren Speichereinheiten, der auf eine nächste Speichereinheit zeigt, und
Speichern dieses Prüfbits zusammen mit dem entsprechenden Wert des Zeigers und dem Datenpaket (110).

5. Verfahren nach Anspruch 4, **dadurch gekennzeichnet, dass** der Schritt der Prüfung, ob der Wert des Zeigers, der während der Leseoperation für ein Datenpaket auf eine nächste Speichereinheit zeigt, korrekt ist oder nicht, weiterhin umfasst:
Erzeugen eines Prüfbits entsprechend dem Wert des Zeigers in der Speichereinheit,
Sammeln des Prüfbits, das zusammen mit dem Datenpaket in der Speichereinheit gespeichert ist,
Vergleichen des erzeugten Prüfbits mit dem gesammelten Prüfbit, und Entscheiden, dass der Wert des Zeigers korrekt ist, wenn die beiden Prüfbits identisch sind, andernfalls Entscheiden, dass der Wert des Zeigers nicht korrekt ist

6. Verfahren nach Anspruch 5, **dadurch gekennzeichnet, dass** jede kleine Speichereinheit in dem Arbeitsbereich und im Bereitschaftsbereich einen Platz enthält, der zum Speichern dieses Wertes des Zeigers, des Prüfbits, bzw. des Datenpakets benutzt wird.

7. Verfahren nach Anspruch 4 oder 5, **dadurch gekennzeichnet, dass** in dem Schritt der Erzeugung eines Prüfbits ein Paritäts-Prüfungsverfahren benutzt wird, um das Prüfbit in Bezug auf den Wert des Zeigers zu erzeugen.

8. Verfahren nach Anspruch 4 oder 5, **dadurch gekennzeichnet, dass** in dem Schritt der Erzeugung des Prüfbits ein zyklisches Redundanzprüfungsverfahren angewandt wird, um das Prüfbit in Bezug auf den Wert des Zeigers zu erzeugen.

9. Verfahren nach Anspruch 1, **dadurch gekennzeichnet, dass** der Schritt des Umschaltens zwischen dem Arbeitsbereich und dem Bereitschaftsbereich weiterhin umfasst:
Löschen aller Datenpakete, die in dem Bereitschaftsbereich gespeichert sind (1061),
Initialisieren des Bereitschaftsbereiches, und Verbinden aller freien Speichereinheiten in dem Bereitschaftsbereich mit Hilfe von Zeigern (1061),
Umschalten des Arbeitsbereiches in einen neuen Bereitschaftsbereich und Umschalten des Bereitschaftsbereiches in einen neuen Arbeitsbereich (1063), wobei der neue Bereitschaftsbereich ein Nur-Lese-Bereich ist, und Speichern des neuen Datenpaketes in dem neuen Arbeitsbereich (110).

10. Verfahren nach Anspruch 1 oder 9, **dadurch gekennzeichnet, dass** es den Schritt der Entscheidung umfasst, dass ein freier Raum in dem Arbeitsbereich nicht ausreicht, wenn eine Menge an freiem Speicherplatz in dem Arbeitsbereich kleiner ist als ein vorbestimmter Schwellenwert.

## Revendications

1. Procédé de stockage de paquets de données au moyen d'une technique de pointeur, **caractérisé en ce que** le procédé consiste à :
partitionner un espace de stockage en une zone de travail et une zone d'attente (101), dont chacune est utilisée en vue de stocker les paquets de données en utilisant une technique de pointeur ;
mettre en oeuvre des opérations, notamment une opération de stockage et une opération de lecture, relativement aux paquets de données dans la zone de travail (103), et ne mettre en oeuvre que des opérations de lecture pour les paquets de données dans la zone d'attente ; et
basculer entre la zone de travail et la zone d'attente si l'espace dans la zone de travail ne suffit pas ou en l'absence d'espace libre disponible dans la zone de travail (105).

2. Procédé selon la revendication 1, **caractérisé en ce que** ladite étape de partitionnement de l'espace de stockage en une zone de travail et une zone d'attente consiste en outre à :
partitionner ladite zone de travail et ladite zone d'attente en une pluralité de petites unités de stockage, respectivement ; et
connecter les petites unités de stockage dans ladite zone de travail et ladite zone d'attente en utilisant respectivement un pointeur (102).

3. Procédé selon la revendication 1, **caractérisé en ce que** ladite étape de mise en oeuvre d'opérations relativement aux paquets de données dans ladite zone de travail consiste en outre à :
déterminer si une opération en cours relativement aux paquets de données est une opération de stockage ou une opération de lecture d'un paquet de données (103) ;
si l'opération en cours est une opération de stockage d'un paquet de données, mettre en oeuvre les étapes ci-dessous consistant à :
déterminer s'il existe un quelconque espace libre dans la zone de travail (104) ;
le cas échéant, stocker le paquet de données dans une ou plusieurs unités de stockage dudit espace libre, en utilisant la technique de pointeur, et définir un pointeur pointant vers l'entête de paquet dudit paquet de données (110) ;
sinon, basculer entre ladite zone de travail et ladite zone d'attente (105) ;
si l'opération en cours est une opération de lecture d'un paquet de données, mettre en oeuvre les étapes ci-dessous consistant à :
lire ledit paquet de données en continu à partir d'une ou plusieurs unités de stockage selon le pointeur pointant vers l'entête de paquet dudit paquet de données (111), et vérifier si la valeur du pointeur dans ladite une ou lesdites plusieurs unités de stockage pointant vers une unité de stockage successive est correcte ou non (112) ; le cas échéant, générer en sortie ledit paquet de données (115) et récupérer l'espace de stockage occupé par ledit paquet de données (114) ; sinon, rejeter ledit paquet de données (116).

4. Procédé selon la revendication 3, **caractérisé en ce que** ladite étape de stockage du paquet de données dans une ou plusieurs unités de stockage de l'espace libre en utilisant la technique de pointeur consiste en outre à :
générer un bit de contrôle selon la valeur du pointeur dans ladite une ou lesdites plusieurs unités de stockage pointant vers une unité de stockage successive ; et
stocker ledit bit de contrôle avec une valeur correspondante du pointeur et le paquet de données (110).

5. Procédé selon la revendication 4, **caractérisé en ce que** ladite étape consistant à vérifier si la valeur du pointeur pointant vers l'unité de stockage successive au cours de l'opération de lecture d'un paquet de données est correcte ou non consiste en outre à :
générer un bit de contrôle selon la valeur du pointeur dans ladite unité de stockage ;
collecter le bit de contrôle stocké avec le paquet de données dans ladite unité de stockage ;
comparer ledit bit de contrôle généré audit bit de contrôle collecté, et déterminer que la valeur du pointeur est correcte si lesdits deux bits de contrôle sont identiques ; sinon, déterminer que la valeur du pointeur est incorrecte.

6. Procédé selon la revendication 5, **caractérisé en ce que** chaque dite petite unité de stockage dans ladite zone de travail et ladite zone d'attente comprend un espace utilisé en vue de stocker ladite valeur de pointeur, le bit de contrôle et le paquet de données, respectivement.

7. Procédé selon la revendication 4 ou 5, **caractérisé en ce qu'**un procédé de contrôle de parité est utilisé en vue de générer le bit de contrôle relativement à la valeur du pointeur dans ladite étape de génération d'un bit de contrôle.

8. Procédé selon la revendication 4 ou 5, **caractérisé en ce qu'**un procédé contrôle de redondance cyclique est utilisé en vue de générer le bit de contrôle relativement à la valeur de pointeur dans ladite étape de génération d'un bit de contrôle.

9. Procédé selon la revendication 1, **caractérisé en ce que** ladite étape de basculement entre la zone de travail et la zone d'attente consiste en outre à :
nettoyer tous les paquets de données stockés dans ladite zone d'attente (1061) ;
initialiser ladite zone d'attente, et connecter toutes les unités de stockage libres dans la zone d'attente en utilisant des pointeurs (1062) ;
basculer la zone de travail sur une nouvelle zone d'attente, et basculer la zone d'attente sur une nouvelle zone de travail (1063), dans laquelle la nouvelle zone d'attente est en lecture seule ; et
stocker le nouveau paquet de données dans la nouvelle zone d'attente (110).

10. Procédé selon la revendication 1 ou 9, **caractérisé en ce qu'**il comprend l'étape consistant à déterminer comme insuffisant un espace libre dans la zone de travail si une quantité de l'espace de stockage libre dans la zone de travail est inférieure à un seuil prédéterminé.
